# EUROPÄISCHE PATENTSCHRIFT

(11) **EP 1 889 128 B1**
(45) Veröffentlichungstag und Bekanntmachung des Hinweises auf die Patenterteilung: **17.01.2018**
(21) Anmeldenummer: 06763213.3
(22) Anmeldetag: 22.05.2006
(51) Int. Cl.: G05B 19/042

(54) **VERFAHREN UND VORRICHTUNG ZUR UMSCHALTUNG BEI EINEM SPEICHER FÜR EIN STEUERGERÄT**
METHOD AND DEVICE FOR SWITCHING IN A MEMORY FOR A CONTROL DEVICE
PROCEDE ET DISPOSITIF POUR REALISER UNE COMMUTATION SUR UNE MEMOIRE DESTINEE A UN DISPOSITIF DE COMMANDE

(30) Priorität: 25.05.2005 DE 102005024618; 14.12.2005 DE 102005059593
(43) Veröffentlichungstag der Anmeldung: 20.02.2008
(73) Patentinhaber: ROBERT BOSCH GMBH, 70442 Stuttgart (DE)
(72) Erfinder: MOESSNER, Claus, 75228 Ispringen (DE); MAIER, Gert, 72770 Reutlingen (DE); SPIZIG, Claus, 89168 Niederstotzingen (DE); LUSTIG, Frank, 70197 Stuttgart (DE); SCHNEIDER, Jens, 70435 Stuttgart (DE)
(86) Internationale Anmeldenummer: PCT/EP2006/062487
(87) Internationale Veröffentlichungsnummer: WO 2006/125760

(56) Entgegenhaltungen:
- EP-A1- 0 765 495
- WO-A2-00/10060
- DE-A1- 19 737 182

## Beschreibung

### Stand der Technik

Die Erfindung geht aus von einem Verfahren und einer Vorrichtung zur Umschaltung bei einem Speicher für ein Steuergerät, wobei ein erster Speicherbereich in dem Steuergerät durch einen zweiten Speicherbereich überlagert wird gemäß den Oberbegriffen der unabhängigen Ansprüche. Weiterhin geht die Erfindung von einem Computerprogramm mit Programmcodemitteln aus, insbesondere gespeichert auf einem computerlesbaren Datenträger gemäß den Ansprüchen 14 und 15.

In Steuergeräten, insbesondere im Kraftfahrzeug, wird zu Mess- und/oder Applikationszwecken ein existierender Speicher, insbesondere ein Nur-Lesespeicher durch andere Speicher ersetzt oder überblendet, um damit Werte zu verstellen bzw. Einstellungen vornehmen zu können, während das Steuergerät in Betrieb ist. Neben Kraftfahrzeugsteuergeräten sind dabei auch andere Steuergeräte wie z. B. aus Fluggeräten oder auch Werkzeugmaschinen und Bearbeitungszentren, Steuergeräte aus der Automatisierungstechnik usw. denkbar.

Eine solche Emulationsvorrichtung für ein Steuergerät zeigt die DE 39 17 979 C2, wobei eine Daten-Manipulationsvorrichtung vorgesehen ist und ein externes an eine insbesondere serielle Schnittstelle des Steuergeräts anschließbares Bediengerät zur Veränderung von Daten eines im Steuergerät enthaltenen Schreib-/Lesespeichers. Dabei ist eine Umschaltvorrichtung zur Umschaltung des Lesezugriffs in der Datenmanipulationsvorrichtung vorgesehen, die zum Einen zwischen dem Schreib-/Lesespeicher und zum Anderen einem Daten-Programm-Lesespeicher umschaltet.

Ebenso zeigt die DE 41 07 052 A1 eine Vorrichtung zur Applikation von Steuergeräten, bei der ebenfalls der Daten-/Programmlesespeicher des Steuergeräts durch eine einen Schreib-/Lesespeicher aufweisende Datenmanipulationsvorrichtung ersetzt wird, an welche ebenfalls über eine serielle Schnittstelle ein Bediengerät angeschlossen ist. Auch hier ist eine Umschalteinrichtung vorgesehen, bei der der Schreib-/Lesespeicher in einem ersten Zyklus mit dem Steuergerät zum Auslesen von Daten und in einem zweiten Zyklus mit der seriellen Schnittstelle zum Ein- oder Auslesen von Daten verbunden ist.

Die DE 197 37 182 A1 offenbart ein Steuergerät zur Steuerung eines Motors, das durch ein Applikationsgerät beeinflusst wird. Eine Umschaltung zwischen Referenz- und Arbeitsdaten in einem Speicherbereich des Steuergeräts wird beschrieben; die Umschaltung ist von außen , durch ein Applikationsgerät steuerbar.

Dabei erfolgt das Umschalten zwischen den Speichern durch das angeschlossene Applikationsgerät. Bei manchen Mikrocontrollern besteht der Überlagerungsspeicher dabei aus mehreren Regionen, welche nur Region für Region aktiviert werden können. Dabei kann häufig nicht verhindert werden, dass das Steuergeräteprogramm während der Umschaltung zwischen den Regionen auf inkonsistente Daten zugreift. Dies ist dadurch bedingt, dass sich durch das sukzessive Einschalten der Regionen ein Zwischenstand bezüglich des überlagerten Speicherbereichs während des Umschaltvorgangs ergibt, der nicht dem gewünschten Endzustand der Daten entspricht. Das Steuergeräteprogramm greift damit auf Daten zu, die zu Teilen aus verschiedenen Speicherbereichen bzw. verschiedenen Regionen bestehen. Durch diese Überschneidung kann es dazu kommen, dass die Steuergerätesoftware mit falschen Daten rechnet, was zu einem verfälschten Ergebnis und im schlimmsten Fall sogar zu einem Programmabsturz führen kann.

Es zeigt sich somit, dass der Stand der Technik nicht in jeder Hinsicht optimale Ergebnisse zu liefern vermag.

Es ist daher Aufgabe der Erfindung, diese Situation zu verbessern und ein Verfahren und eine Vorrichtung zur Umschaltung bei einem Speicher für ein Steuergerät, bei dem die genannten Dateninkonsistenzen vermieden werden können.

### Vorteile der Erfindung

Zur Lösung dieser Aufgabe zeigt die Erfindung ein Verfahren und eine Vorrichtung zur Umschaltung bei einem Speicher für ein Steuergerät, wobei ein erster Speicherbereich in dem Steuergerät durch einen zweiten Speicherbereich überlagert wird, wobei der zweite Speicherbereich eine oder mehrere Speicherseiten enthält und vorteilhafter Weise jede der Speicherseiten den ersten Speicherbereich überlagern kann, wobei zwischen den Speicherseiten umgeschaltet werden kann und/ oder die Überlagerung ein-/ ausgeschaltet (EA) werden kann und die Umschaltung der Speicherseiten des zweiten Speicherbereichs durch die Software des Steuergerätes selbst ausgeführt wird. D. h. aus Sicherheitsgründen ist eine zweite Speicherseite vorhanden oder der ursprüngliche Speicherbetrieb wird als Rückfallseite benutzt, um gegebenenfalls das vom Steuergerät gesteuerte System in einen sicheren Zustand zurückzuführen, eben durch Umschalten auf eine andere Speicherseite oder Beenden der Überblendung des Speicherbereichs, um so die ursprünglichen Daten wieder sichtbar zu machen. Das Umschalten der Seiten und das Überblenden des Speicherbereichs erfolgt dabei nun erfindungsgemäß durch die Steuergerätesoftware. Dadurch, dass die Steuergerätesoftware die Umschaltung und die Überblendung des Speicherbereichs auslöst und/oder durchführt, kann sichergestellt werden, dass kein Zugriff auf inkonsistente Daten erfolgt, weil keine dritte Instanz mehr durch Umschaltauslösung Dateninkonsistenzen erzeugen kann. Im allgemeinen Sprachgebrauch wird das Überblenden eines Speicherbereichs durch eine Speicherseite ebenfalls als Seitenschalten bezeichnet, da dieser Vorgang im Wesentlichen einem Umschalten zwischen zwei Speicherseiten entspricht, wobei eine den gleichen Inhalt wie der zu überblendende Bereich hat. Im Folgenden wird daher auch das Überblenden des Speicherbereichs mit einer Seite als Umschalten der Seite bezeichnet.

Vorteilhafter Weise wird die Umschaltung der Speicherseiten durch das Applikationssystem angefordert, und zwar zweckmäßiger Weise in der Art, dass das Applikationssystem die Umschaltung anfordert, indem eine Umschaltkennung in eine vorgegebene Speicherstelle des Steuergerätes geschrieben wird, wobei die Speicherstelle nicht bei der Überlagerung verwendet wird. D. h. also, das Applikationssystem fordert ein Umschalten der Seiten an, indem eine Botschaft in eine vereinbarte Speicherstelle des Steuergerätes geschrieben wird.

Ebenso zweckmäßig ist es, dass die erfolgte Umschaltung der Speicherseiten durch die Software des Steuergerätes bestätigt wird, und zwar vorteilhafter Weise dadurch, dass die Software des Steuergerätes eine Bestätigungskennung in eine vorgegebene Speicherstelle des Steuergerätes schreibt, die ebenfalls nicht bei der Überlagerung verwendet wird. Dabei kann es sich um die gleiche oder auch um eine unterschiedliche Speicherstelle bezüglich Bestätigungskennung und Umschaltkennung handeln. So gibt die Steuergerätesoftware vorteilhafter Weise nur eine Bestätigung über den Erfolgt des Seitenumschaltens zurück, indem eine Botschaft in eine Speicherstelle geschrieben wird. Das Applikationssystem kann dann diese Antwort auswerten.

In einer besonders vorteilhaften Ausgestaltung kann der erste Speicherbereich des Steuergerätes, der durch den zweiten Speicherbereich überlagert wird, im Betrieb des Steuergerätes verändert werden, indem das Steuergerät diesen ersten Speicherbereich anhand einer Überlagerungskonfigurationstabelle verändert bzw. anpasst. D. h. es ist für das Applikationssystem vorteilhaft, während des Betriebs den Bereich des Speichers, der überlagert wird, zu verändern. Diese erweiterte Kontrolle der Seitenkonfiguration durch das Applikationssystem wird dadurch erreicht, dass dem Steuergerät eine Überlagerungskonfigurationstabelle mitgeteilt wird.

Dabei ist es weiterhin vorteilhaft, dass das Steuergerät bei einem Initialisierungsvorgang, also insbesondere beim Start des Steuergerätes die Überlagerungskonfigurationstabelle abarbeitet und so sofort bei der Initialisierung der erste Speicherbereich durch den zweiten Speicherbereich überlagert wird und die Steuergerätesoftware beim Hochfahren die Überlagerungskonfigurationstabelle bereits abarbeitet. Dazu ist es zweckmäßig, dass die Überlagerungskonfigurationstabelle in einem Speicherbereich oder in einer Speicherstelle abgelegt wird, welche auch nach Abschalten des Systems oder bei Energieverlust weiterhin die abgelegten Daten hält, wie dies insbesondere durch Batteriepufferung oder Ähnliches erreicht werden kann.

Weitere Vorteile und vorteilhafte Ausgestaltungen ergeben sich aus den Merkmalen der Ansprüche sowie aus der Beschreibung.

### Zeichnung

Die Erfindung wird im Folgenden anhand der in der Zeichnung dargestellten Figuren näher erläutert.

Dabei zeigt
Figur 1 den beispielhaften Aufbau eines Mess- und/oder Applikationssystems, wie es erfindungsgemäß Einsatz finden kann.
Figur 2 zeigt den schematischen Aufbau eines Mikrocontrollers zur Darstellung des erfindungsgemäßen Seitenschaltverfahrens.

Die Erfindung wird nun anhand der Ausführungsbeispiele näher erläutert.

### Beschreibung der Ausführungsbeispiele

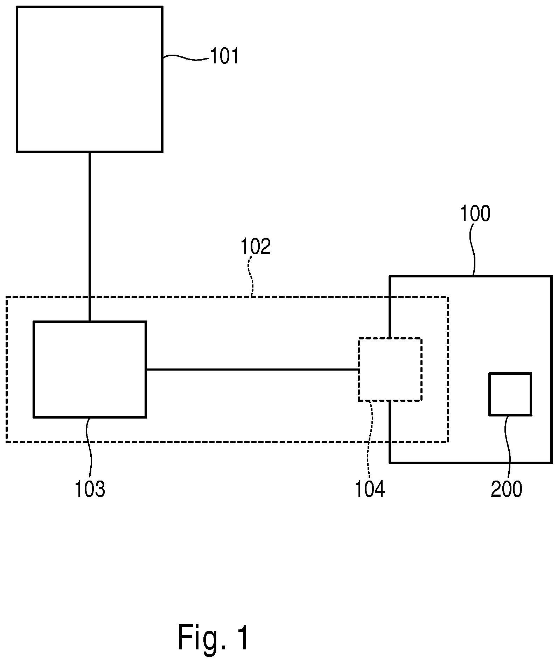

In Figur 1 ist ein beispielhafter Aufbau dargestellt, wie er bei Mess- und/oder Applikationssystemen verwendet wird. Darin ist mit 100 ein Steuergerät dargestellt, in welchem wenigstens ein Speicherbereich überlagert werden soll. Das Applikationsgerät oder Messgerät, durch welches Modifikationen, Messungen und Abfolgeänderungen durchgeführt werden sollen, ist mit 101 dargestellt. Dieses Gerät, im Weiteren als Applikationsgerät 101 bezeichnet, wird über eine zusätzliche Hardware 102 an das Steuergerät 100 angebunden. In einer speziellen Ausgestaltung kann die Hardware 102 aus einer Umsetzbox 103 sowie einer Emulationshardware 104 aufgebaut sein. Die Emulationshardware 104 kann dabei insbesondere ein ETK, ein Emulatortastkopf sein. In der Umsetzbox 103 erfolgt dann die Signalumsetzung zwischen Applikationsgerät 101 und Steuergerät 100 respektive der Emulationshardware 104. Bei dem Applikationsgerät kann es sich insbesondere um einen handelsüblichen PC, Laptop oder dergleichen handeln.

Die Aufteilung der Hardware in einen Teil außerhalb und einen Teil innerhalb des Steuergeräts ist nur beispielhaft und soll in keiner Weise den Gegenstand der Erfindung dahingehend einschränken, dass eine bestimmte Aufteilung zwingend vorgeschrieben wäre. So kann zum Einen die Umsetzbox 103 entfallen und es ist neben der Verbindung, beispielsweise über Emulatortastkopf bezüglich des Bausteins 104 auch eine Verbindung mit einem anderen Verfahren möglich, wie z. B. mit einer Busverbindung wie CAN (Controller Area Network), USB (Universal Serial Bus), Flex Ray, TTCAN (Time Triggered Controller Area Network) oder auch XCP. Deshalb kann der Baustein 104 als optional betrachtet werden und kann sich sowohl innerhalb des Steuergeräts als auch außerhalb und nur mit dem Steuergerät 100 verbunden, vorgestellt werden. Eine konkrete Variante ist eben die Verwendung einer Emulutionshardware wie einem Emulatortastkopf, einer Umsetzbox 103 zur Verbindung des Applikationsgerätes 101 mit dem Steuergerät 100. Die Zusatzhardware 102 kann aber auch nur als Signalumsetzung zwischen Applikationsgerät 101 und Steuergerät 100 fungieren. Besitzen Applikationsgerät 101 und Steuergerät 100 die Möglichkeit zur direkten Kommunikation, z. B. via CAN oder Flex Ray oder auch USB kann in manchen Fällen die Zusatzhardware 102 gänzlich entfallen.

D. h. die Erfindung, also das erfindungsgemäße Seitenschaltverfahren des Steuergerätes, insbesondere durch Überlagerungskonfigurationstabellen, ist unabhängig von der Hardware anwendbar, so dass generell jede Verbindung, mit der der Speicher des Mikrocontrollers verändert werden kann, geeignet ist.

Im Weiteren wird aber konkret auf den Aufbau mit Emulatortastkopf 104, Umsatzbox 103 Bezug genommen, um eine unverständliche Beschreibung durch Berücksichtigung aller möglichen Aufbauvarianten zu vermeiden. In Kenntnis der Erfindung ist es aber kein Problem, das erfindungsgemäße Verfahren und die Vorrichtung auf eine Vielzahl unterschiedlicher Aufbauvarianten der Hardware zu übertragen.

Die Hardware, die direkt mit dem Steuergerät verbunden ist, also hier Element 104, wird im Folgenden Emulatortastkopf genannt und mit ETK abgekürzt. Dieser ETK ist entweder in das Steuergerät 100 eingebaut oder auch außerhalb des Steuergeräts angebracht und mit diesem verbunden. Je nach ETK-Typ kann die Anbindung z. B. über die Debug-Schnittstelle oder an einen parallelen Bus des Mikrocontrollers stattfinden. Zweckmäßiger Weise befindet sich das Steuergerät im Betrieb, während die Mess- und Verstellaufgabe durchgeführt wird. Dabei ist das Steuergerät meist im Fahrzeug verbaut, kann aber auch außerhalb der Laborbedingungen getestet werden. Dabei übernimmt das Steuergerät im Betrieb Regelungs- und Steueraufgaben, z. B. im Kraftfahrzeug bezüglich der Motorsteuerung oder auch der Bremsensteuerung, Getriebesteuerung, Lenkungssteuerung, also grundsätzlich zur Regelung bzw. Steuerung von irgendwelchen Betriebsabläufen, insbesondere in einem Fahrzeug, aber auch bei Werkzeugmaschinen generell in der Automatisierung oder anderen Anwendungen.

Im Mikrocontroller 200 des Steuergerätes 100 befindet sich zusätzlich ein Schreib-Lesespeicher, der verwendet wird, um Daten in einem anderen Speicher, beispielsweise in einem Nur-Lesespeicher, insbesondere einem Flash-Speicher des Mikrocontrollers zu überlagern. So wird ein erster Speicherbereich des Mikrocontrollers, insbesondere ein programmierbarer Nur-Lesespeicher in Form eines Flash-Speichers, EEPROM-Speichers, PROM-Speichers, aber auch einem ROM durch einen zweiten Speicherbereich überlagert. Dabei werden insbesondere die Daten in diesem ersten Speicherbereich des Mikrocontrollers durch andere Daten überblendet. Durch diese Überlagerung des ersten Speicherbereichs durch den zweiten Speicherbereich ist es möglich, während das Steuergerät seine Betriebsaufgabe insbesondere im Fahrzeug erfüllt, z. B. Parameter zu messen, am PC, also dem Applikationsgerät 101 zu visualisieren und zu verändern bzw. anzupassen. Damit kann das Steuergerät 100 für die jeweilige Anwendung, insbesondere für das jeweilige Fahrzeug angepasst und optimiert werden, insbesondere im Betrieb, z. B. während ein Fahrzeug am Straßenverkehr teilnimmt.

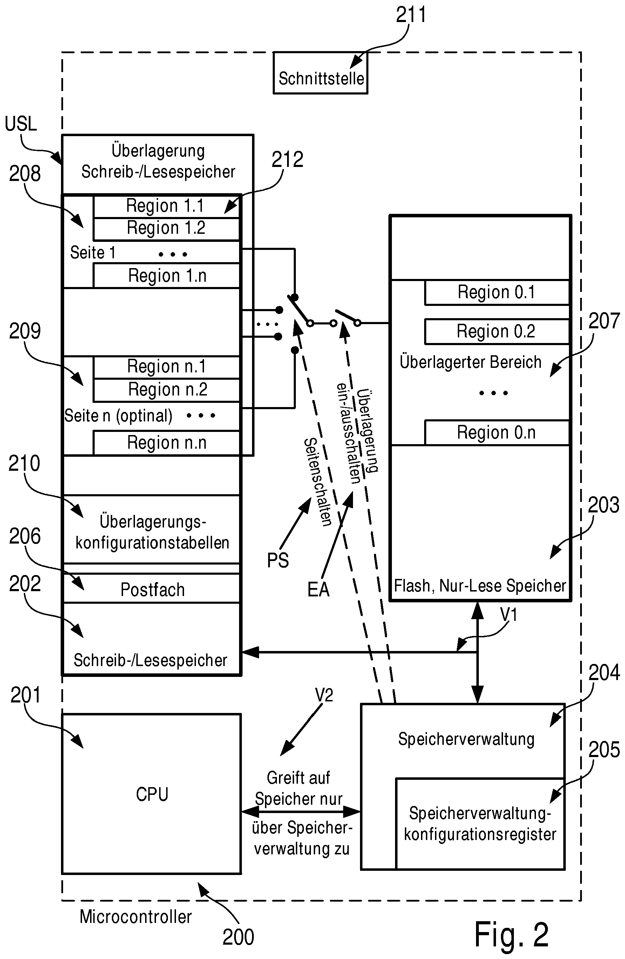

Figur 2 zeigt nun den Mikrocontroller 200 des Steuergerätes 100, der neben der eigentlichen Recheneinheit, also der Central Processing Unit CPU 201 auch einen ersten Speicher 203, einen zweiten Speicher 202, eine Schnittstelle 211 sowie eine Speicherverwaltung 204 beinhaltet. Über eine erste Verbindung V1 sind der erste Speicher 203, der zweite Speicher 202 und die Speicherverwaltung 204 miteinander verbunden. Über eine zweite Verbindung V2 ist die CPU 201 mit der Speicherverwaltung 204 verbunden, d. h. die CPU greift auf die Speicher insbesondere über die Speicherverwaltung 204 zu. Weitere Einheiten und Bausteine im Mikrocontroller, die für das Verfahren nicht relevant sind, wurden hier der besseren Übersichtlichkeit wegen weggelassen. Bei dem ersten Speicher 203 handelt es sich, wie bereits erwähnt, beispielsweise um einen Flash-Speicher, EEPROM-Speicher, EPROM, PROM, also insbesondere einen programmieren Speicher, wobei auch ein Nur-Lesespeicher in Form eines ROMs denkbar ist. Dieser erste Speicher 203 enthält üblicherweise Daten und/oder auch Programme, die der Mikrocontroller im Steuergerät zur Durchführung der jeweiligen Regel- oder Steueraufgabe verwendet. Der Schreib-/Lesespeicher 202 kann als Arbeitsspeicher z. B. als flüchtiger Speicher, also als RAM ausgebildet sein, kann aber ebenso wie der erste Speicher 203 als nichtflüchtiger Speicher, also wie beschrieben als programmierbarer Speicher ausgebildet sein. Insbesondere wird aber hier für Speicher 202 ein RAM verwendet. Bei der Schnittstelle 211 kann es sich um eine serielle ebenso wie eine parallele Schnittstelle handeln, und wie bereits vorher beschrieben, kann dies die Debug-Schnittstelle sein; es ist aber auch jede andere Verbindung respektive Schnittstelle an dieser Stelle möglich, eben wie bereits erwähnt CAN, USB; Flex Ray, TTCAN, XCP usw. Dem Mess- und/oder Applikationssystem, also dem Applikationsgerät oder Applikationssystem 101 ist es möglich, mit Hilfe der Schnittstelle 211, insbesondere der Debug-Schnittstelle die Inhalte des zweiten Speichers 202, also des Schreib-/Lesespeichers zu verändern. Daneben kann das Applikationssystem 101 über diese Schnittstelle 211 aber auch Register des Mikrocontrollers, z. B. Verbindung mit der CPU anpassen und verändern. Wie erwähnt, kann anstelle einer Debug-Schnittstelle auch jede andere Schnittstelle, insbesondere serielle Schnittstelle verwendet werden, welche Zugriff auf den Speicher des Mikrocontrollers bietet.

Die Speicherverwaltung enthält noch ein Speicherverwaltungs-Konfigurationsregister 205, auf das ebenfalls über die Schnittstelle 111 Einfluss genommen werden kann. Der Schreib-Lesespeicher 202 ist vorteilhafter Weise im Mikrocontroller selbst untergebracht, könnte sich aber auch außerhalb im Steuergerät, insbesondere auf einer Zusatzhardware befinden. Der zweite Speicher 202 enthält dabei einen Bereich 210 zur Aufnahme der Überlagerungs-Konfigurationstabellen ÜKT, eine spezielle Speicherstelle, hier als Postfach bezeichnet und mit 206 nummeriert sowie Speicherseiten 1 und 2, mit 208 und 209 bezeichnet, zwischen denen erfindungsgemäß umgeschaltet und/ oder die Überlagerung ein-/ ausgeschaltet (EA) werden kann und die einen überlagerten Bereich im ersten Speicher 203, den Bereich 207 je nach Umschalten durch das Seitenschalten PS überblenden. Dabei ist es auch denkbar, dass eine Umschaltung zwischen mehr als drei Seiten zur Überblendung des überlagerten Bereiches 207 erfolgen kann, so dass Sicherheit und Variationsmöglichkeiten weiter erhöht werden. D. h. also, das Applikationsgerät ist in der Lage, bestimmte Bereich, insbesondere einen bestimmten ersten Bereich im ersten Speicher 203, nämlich den überlagerten Bereich 207 durch Überlagerungsspeicher zu überblenden und damit Werte zu verstellen, während das Steuergerät in Betrieb ist. Aus Sicherheitsgründen und aus Gründen der Variabilität kann es mehrere Seiten 208 und 209 geben, dabei kann eine der Seiten entfallen, da man den ursprünglichen Speicherbereich ebenfalls als Speicherseite interpretieren kann, zwischen denen geschaltet werden kann, um zum einen die Variantenvielfalt zu erhöhen oder zum Anderen gegebenenfalls das Steuergerät respektive die vom Steuergerät gesteuerten Systeme in einen sicheren Zustand zurückführen zu können. Dabei fordert das Applikationssystem erfindungsgemäß ein Umschalten der Seiten an, indem eine Botschaft in eine vereinbarte Speicherstelle, z. B. das Postfach 206 des Steuergerätes geschrieben wird. D. h. es wird ein erster Speicherbereich 207 durch einen zweiten Speicherbereich, hier dargestellt durch USL, der wenigstens zwei Speicherseiten 208 und 209 enthält, überlagert. Eine Umschaltung zwischen den beiden den Speicherbereich 207 überlagernden Seiten 208 und 209 und/ oder das Ein-/ Ausschalten (EA) der Überlagerung erfolgt durch das Seitenschalten PS durch die Speicherverwaltung 204, auf die durch die CPU 201 oder auch über die Schnittstelle 211 durch das Applikationssystem zugegriffen werden kann. Das Umschalten erfolgt dann durch die Steuergerätesoftware selbst bzw. wird durch diese ausgeführt. Dadurch, dass die Steuergerätesoftware selbst die Umschaltung durchführt bzw. auslöst kann sichergestellt werden, dass kein Zugriff auf inkonsistente Daten erfolgt, da immer die aktuellen Daten vorliegen und kein überlappender Inkonsistenzen erzeugender Eingriff in diese Software erfolgt. Die Anforderung der Umschaltung durch das Applikationssystem kann insbesondere dadurch erfolgen, dass eine Umschaltkennung UK in eine vorgegebene Speicherstelle, z. B. das Postfach 206 des Steuergerätes eingeschrieben wird, die selbst nicht bei der Überlagerung verwendet wird. Über den Erfolg des Seitenumschaltens ergibt dann die Steuergerätesoftware eine Bestätigung zurück, beispielsweise indem sie eine Botschaft an eine Speicherstelle schreibt. Es wird also insbesondere eine Bestätigungskennung BK in eine vorgegebene Speicherstelle, beispielsweise auch das Postfach 206 des Steuergerätes geschrieben, die ebenfalls nicht bei der Überlagerung verwendet wird. Zum Einschreiben der Umschaltkennung UK bzw. der Bestätigungskennung BK kann die gleiche Speicherstelle wie hier 206, können aber auch unterschiedliche Speicherstellen eingesetzt werden. Die jeweiligen Kennungen bzw. Botschaften werden dann ausgewertet. So wertet das Applikationssystem die Antwort der Steuergerätesoftware, also die Bestätigungskennung BK aus und greift dazu auf das Postfach 206 über die Schnittstelle 211 zu.

Noch größere Flexibilität erhält man und ist somit für das Applikationssystem 101 vorteilhaft, wenn während des Betriebs der überlagerte Speicherbereich, also hier 207, verändert werden kann und man dabei auch völlig frei in der Wahl der Seiten ist, die den jeweils in Rede stehenden Speicherbereich überblenden sollen. Um diese erweiterte Kontrolle der Seitenkonfiguration durch das Applikationssystem zu erreichen, wird dem Steuergerät eine Überlagerungskonfigurationstabelle mitgeteilt. Eine solche Überlagerungskonfigurationstabelle ÜKT enthält Anweisungen, wie die Register, also insbesondere das Speicherverwaltungskonfigurationsregister, aber auch andere Register oder die Speicherbereiche, durch das Steuergerät zu modifizieren sind. Damit ist es möglich, während des Betriebs des Steuergeräts die Konfiguration, also insbesondere die Zuordnung der Seiten zu bestimmten überlagerten Bereichen zu ändern und somit den Überlagerungsspeicher, also den zweiten Speicher 202, sehr effizient und flexibel einzusetzen, um den ersten Speicher 203 an entsprechenden ersten Speicherbereichen zu überblenden, wobei eben die ersten Speicherbereiche ebenso wie die Seiten des zweiten Überlagerungsspeicherbereichs USL flexibel, anpassbar und veränderbar einstellbar sind. Dabei muss der Steuergerätesoftware durch Verwendung der Überlagerungskonfigurationstabellen der genaue Aufbau, die Konfiguration und die Benutzung der Register bzw. Speicherbereiche nicht bekannt sein, sondern es arbeitet lediglich eine Tabelle, eben die Überlagerungskonfigurationstabelle ÜKT ab, welche alle notwendigen Daten zur Modifikation der Speicherbereiche bzw. der Speicherstellen, wie des Postfachs 206 enthält.

Die CPU 201 kann durch eine Botschaft oder eine weitere Kennung im Postfach angesto-βen werden, die Überlagerungskonfigurationstabellen ÜKT im Speicherbereich 210 abzuarbeiten. Dadurch werden die Register 205 der Speicherverwaltung 204 entsprechend gesetzt. Dies hat zur Folge, dass ein bestimmter Bereich des Überlagerungsspeichers USL den ersten Speicher 203 respektive den zu überlagernden Bereich 207 überblendet. Die CPU 201 sieht während des Betriebes nur den von der Speicherverwaltung 204 des Mikrocontrollers 200 dargestellten Speicher, der eben hier dann wenigstens einer der beiden Seiten 208 oder 209 des Überlagerungsspeichers USL oder dem ursprünglichen Speicherbereich entspricht. Die Emulationshardware, also hier der Emulatortastkopf ETK 104 kontrolliert dabei den Mikrocontroller 200 mit Hilfe der Schnittstelle 211, insbesondere der Debug-Schnittstelle. Es ist nun möglich, den Speicherinhalt des Schreib-/Lesespeichers, also des RAMs oder zweiten Speichers 202 zu modifizieren und somit sowohl die Daten zu verändern als auch die CPU 201 zu beeinflussen. Durch ein entsprechendes Programm, das in der CPU 201 abgearbeitet wird, ist es möglich, dass die CPU 201 beim Beschreiben des Postfachs 206 durch die Emulationshardware, also den ETK reagiert und die Überlagerungskonfigurationstabellen aus Bereich 210 abarbeitet. Damit werden dann die Register der Speicherverwaltung, also die Speicherverwaltungskonfigurationsregister 205 des Mikrocontrollers 200 verändert. Dies hat wiederum zur Folge, dass ein anderer Bereich des ersten Speichers, also insbesondere des Nur-Lesespeichers 203 durch den Schreib-/Lesespeicher 202, insbesondere durch den Überlagerungsbereich USL überblendet wird. Durch Einsatz der Überlagerungskonfigurationstabellen in Speicherbereich 210 ist es darüber hinaus ebenfalls möglich, die Größe und Lage des Bereichs, der überblendet wird, also des überlagerten Bereichs 207 zu verändern oder aber auch die Überlagerung abzuschalten. Dies geschieht, wie bereits erwähnt, einfach durch Abarbeitung der Anweisungen in der Überlagerungskonfigurationstabelle. Darin ist also konkret beschrieben, wie die Register 205 zu modifizieren sind und abhängig von diesen Modifikationen sind die beschriebenen Änderungen der Größe und Lage des überlagerten Bereichs ebenso wie Größe, Lage und welche Seite des überlagernden Bereichs im Betrieb einstellbar. So wird z. B. Anfangs- und Endadresse des überlagerten Bereichs ebenso wie Anfangs- und Endadresse des überlagernden Bereichs in der ÜKT dargestellt. Größe und Lage der jeweiligen Speicherbereiche kann auch durch Verwendung von Zeigern in der ÜKT dargestellt werden. Die Register in der Speicherverwaltung werden dann eben mit diesen Zeigern bzw. den Zeigeradressen respektive den Anfangs- oder Endadressen für die jeweiligen Bereiche, also den ersten und/oder zweiten Speicherbereich, will heißen, den überlagerten Bereich ebenso wie den überlagernden Bereich, befüllt. Dies gibt zum Einen dem Applikationssystem 101 ein extrem hohes Maß an Flexibilität bezüglich der Konfiguration, daneben werden Dateninkonsistenzen vermieden, da immer noch die Steuergerätesoftware selbst das Seitenumschalten durchführt und auch auf die jeweiligen Adressen bzw. Adresszeiger zugreift.

Für die Applikation eines Steuergerätes ist es in vielen Fällen sinnvoll, mit aktivem Überlagerungsspeicher zu starten. D. h. es ist sinnvoll, in der Initialisierungsphase, z. B. beim Hochfahren oder auch nach einem Reset bereits auf den Überlagerungsspeicher USL bzw. die entsprechende Seite 208 oder 209 zuzugreifen und nicht erst mit dem überlagerten Bereich 207 zu initialisieren. Damit ist es dann möglich, direkt vom Hochfahren des Steuergerätes an die Applikation durchzuführen. Dazu kann eine direkte Zuordnung der Steuergerätesoftware zu den Überlagerungskonfigurationstabellen in 210 erfolgen, so dass die Steuergerätesoftware bei der Initialisierung, also insbesondere beim Hochfahren die Überlagerungskonfigurationstabellen sofort abarbeitet und damit sofort mit dem Überlagerungsbereich, also hier den Seiten 208 bzw. 209 aus USL startet statt mit dem überlagerten Bereich 207. Dazu ist es sinnvoll, die Überlagerungskonfigurationstabelle nicht flüchtig abzulegen. Dies kann auch dadurch erfolgen, dass ein batteriegepufferter Speicher oder Speicherbereich verwendet wird, in dem die Überlagerungskonfigurationstabellen ÜKT abgelegt werden, um so direkt bei der Initialisierung zur Verfügung zu stehen. Dann müssen diese Überlagerungskonfigurationstabellen nicht erst durch das Applikationssystem 101 in das Steuergerät eingespielt werden, sondern liegen dort direkt vor und können dann insbesondere direkt bei der Initialisierung benutzt werden. Aber auch, wenn die ÜKT nicht direkt bei der Initialisierung verwendet wird, ist es sinnvoll, sie in einem nichtflüchtigen Speicher im Steuergerät abzulegen, so dass zunächst kein Eingriff des Applikationssystems 101 im Rahmen der Seitenumschaltung erfolgen muss.

Dabei kann jede einzelne dieser Seiten aus mehreren Regionen bestehen, wobei für jede Region jeweils ein Register der Speicherverwaltung des Mikrocontrollers 200 zuständig ist. Damit wäre es dann unter Umständen nicht möglich, das Seitenschalten auf einmal durchzuführen, womit das Umschalten sukzessive erfolgen würde, was, wie im Stand der Technik ebenfalls zu inkonsistenten Datensätzen führen könnte. Dadurch aber, dass in dem erfindungsgemäßen Verfahren die Steuergerätesoftware selbst das Beschreiben der Register 205 durchführt, kann die Seitenumschaltung zu einem Zeitpunkt geschehen, bei dem die Steuergerätesoftware gerade nicht auf die Speicher zugreift. Damit ist sichergestellt, dass eine Überschneidung oder ein Überlappen beim Speicherzugriff nicht erfolgt und somit von der Steuergerätesoftware nicht auf inkonsistente Zwischenstände der Daten zugegriffen wird. Wie bereits erwähnt, ist neben dem Aufbau mit zwei Seiten 208 und 209 auch jede andere Anzahl von Seiten möglich.

Insbesondere ist auch nur eine Seite möglich, wobei dann die zweite Konfiguration durch den Initialzustand der Register 205 gebildet wird.

Das Seitenschaltverfahren gemäß der Erfindung bei einem Steuergerät durch Überlagerungskonfigurationstabellen hat nun insbesondere gegenüber dem Stand der Technik den Vorteil, dass es völlig generisch ist und die Steuergerätesoftware nicht angepasst werden muss, sondern unverändert bei unterschiedlichen Speicheraufteilungen verwendet werden kann. Auch bei Hardwareänderungen ist es möglich, das Mess- und Applikationssystem und die Steuergerätesoftware unverändert zu lassen und nur die Überlagerungskonfigurationstabellen entsprechend anzupassen.

Das vorgestellte Verfahren ist auch in Form eines Computerprogrammes mit Programmcodemitteln darstellbar und kann auf einem System wie in Figur 1 beschrieben zum Ablauf gebracht werden, welches eine erfindungsgemäße Vorrichtung nach Anspruch 8 enthält. Dabei kann das Computerprogramm auch auf einem Datenträger gespeichert werden, der computerlesbar ist also z.B. eine CD-ROM, Diskette, DVD, EEPROM, EPROM, Flash-Speicher, Speicherkarte, Chipkarte, PROM, ROM, RAM, oder sonstigen Speichermedien die in irgend einer Form durch einen Computer gelesen werden können. Die Darstellung als Computerprogramm stellt nur eine spezielle Ausprägung dar und basiert auf den gleichen erfindungsgemäßen technischen Prinzipien.

## Patentansprüche

1. Verfahren zur Umschaltung bei einem Speicher für ein Steuergerät (100), wobei ein erster Speicherbereich (207) in dem Steuergerät durch einen zweiten Speicherbereich (USL) überlagert wird, wobei der zweite Speicherbereich (USL) wenigstens eine Speicherseiten (208, 209) enthält, wobei zwischen einer ursprünglichen nicht überlagerten Speicherkonfiguration und dem Überlagern mit einer der Speicherseiten umgeschaltet werden kann, **dadurch gekennzeichnet, dass** die Umschaltung zwischen der ursprünglichen Speicherkonfiguration und dem Überlagern mit einer der Speicherseiten des zweiten Speicherbereichs (USL) durch die Software des Steuergerätes (100) selbst ausgeführt wird.

2. Verfahren nach Anspruch 1, **dadurch gekennzeichnet, dass** die Umschaltung der Speicherseiten (208, 209) und/ oder das Ein-/ Ausschalten (EA) des Überlagerns des Speicherbereichs (207) durch wenigstens eine der Speicherseiten (208 oder 209) durch ein Applikationssystem (101) angefordert wird.

3. Verfahren nach Anspruch 2, **dadurch gekennzeichnet, dass** das Applikationssystem (101) die Umschaltung und/ oder das Ein-/ Ausschalten (EA) der Überlagerung anfordert, indem eine Umschaltkennung (UK) in eine vorgegebene Speicherstelle (206) des Steuergerätes (100) geschrieben wird, die nicht bei der Überlagerung verwendet wird.

4. Verfahren nach Anspruch 1, **dadurch gekennzeichnet, dass** die erfolgte Umschaltung der Speicherseiten (208, 209) und/ oder das Ein-/ Ausschalten (EA) der Überlagerung durch die Software des Steuergerätes (100) bestätigt wird.

5. Verfahren nach Anspruch 4, **dadurch gekennzeichnet, dass** die Software des Steuergerätes (100) die Umschaltung und/ oder das Ein-/ Ausschalten (EA) der Überlagerung bestätigt, indem eine Bestätigungskennung (BK) in eine vorgegebene, Speicherstelle (206) des Steuergerätes (100) geschrieben wird, die nicht bei der Überlagerung verwendet wird.

6. Verfahren nach Anspruch 1, **dadurch gekennzeichnet, dass** der erste Speicherbereich (207), der überlagert wird im Betrieb des Steuergerätes (100) veränderbar ist indem das Steuergerät (100) diesen ersten Speicherbereich anhand einer Überlagerungskonfigurationstabelle (ÜKT, 210) verändert.

7. Verfahren nach Anspruch 6 **dadurch gekennzeichnet, dass** die Überlagerungskonfigurationstabelle (ÜKT, 210) vom Applikationssystem (101) in das Steuergerät (100) geschrieben wird und während des Betriebs verändert wird.

8. Verfahren nach Anspruch 6, **dadurch gekennzeichnet, dass** das Steuergerät (100) bei einem Initialisierungsvorgang die Überlagerungskonfigurationstabelle (ÜKT, 210) abarbeitet und so sofort bei der Initialisierung der erste Speicherbereich (207) durch den zweiten Speicherbereich (USL) überlagert wird.

9. Vorrichtung zur Umschaltung bei einem Speicher für ein Steuergerät (100), wobei ein erster Speicherbereich (207) in dem Steuergerät durch einen zweiten Speicherbereich (USL) überlagert wird, wobei der zweite Speicherbereich (USL) wenigstens eine Speicherseite (208, 209) enthält, wobei die Vorrichtung derart ausgestaltet ist, dass zwischen einer ur-sprünglichen nicht überlagerten Speicherkonfiguration und dem Überlagern mit einer der Speicherseiten umgeschaltet werden kann, **dadurch gekennzeichnet, dass** die Vorrichtung derart ausgestaltet ist, dass die Umschaltung zwischen der ursprünglichen Speicherkonfiguration und dem Überlagern mit einer der Speicherseiten des zweiten Speicherbereichs (USL) durch die Software des Steuergerätes (100) selbst ausgeführt wird.

10. Vorrichtung nach Anspruch 9, **dadurch gekennzeichnet, dass** wenigstens eine Speicherstelle (206) vorgesehen ist, die nicht bei der Überlagerung verwendet wird, und in welche eine Umschaltkennung (UK) zur Anforderung der Umschaltung geschrieben wird.

11. Vorrichtung nach Anspruch 9, **dadurch gekennzeichnet, dass** wenigstens eine Speicherstelle (206) vorgesehen ist, die nicht bei der Überlagerung verwendet wird und in welche eine Bestätigungskennung (BK) zur Bestätigung der Umschaltung geschrieben wird.

12. Vorrichtung nach Anspruch 9, **dadurch gekennzeichnet, dass** eine Überlagerungskonfigurationstabelle (ÜKT, 210) vom Applikationssystem (101) in das Steuergerät (100) geschrieben wird, und die Vorrichtung derart ausgestaltet ist, dass die Überlagerungskonfigurationstabelle (ÜKT, 210) während des Betriebs verändert werden kann.

13. Vorrichtung nach Anspruch 9, **dadurch gekennzeichnet, dass** ein Speicherbereich (210) für eine Überlagerungskonfigurationstabelle (ÜKT) vorgesehen ist und die Vorrichtung derart ausgestaltet ist, dass der erste Speicherbereich (207), der überlagert wird im Betrieb des Steuergerätes veränderbar ist indem das Steuergerät diesen ersten Speicherbereich anhand der Überlagerungskonfigurationstabelle (ÜKT) verändert.

14. Vorrichtung nach Anspruch 12, **dadurch gekennzeichnet, dass** diese derart ausgestaltet ist, dass das Steuergerät (100) bei einem Initialisierungsvorgang die Überlagerungskonfigurationstabelle (ÜKT) abarbeitet und so sofort bei der Initialisierung der erste Speicherbereich (207) durch den zweiten Speicherbereich (USL) überlagert wird.

15. Vorrichtung nach Anspruch 13 oder 14, **dadurch gekennzeichnet, dass** der Speicherbereich (210) mit der Überlagerungskonfigurationstabelle (ÜKT) derart gestaltet ist, dass auch nach einem Abschalten der Energieversorgung der Vorrichtung die Überlagerungskonfigurationstabelle (ÜKT) erhalten bleibt.

16. Computerprogramm mit Programmcodemitteln um alle Schritte von jedem beliebigen der Ansprüche 1 bis 8 durchzuführen, wenn das Programm von einer Vorrichtung nach Anspruch 9 ausgeführt wird.

17. Computerprogramm nach Anspruch 16, **dadurch gekennzeichnet, dass** es auf einem Computer lesbaren Datenträger gespeichert ist.

## Claims

1. Method for switching in a memory for a control device (100), wherein a second memory area (USL) is superimposed on a first memory area (207) in the control device, wherein the second memory area (USL) contains at least one memory page (208, 209), wherein it is possible to switch between an original memory configuration without superimposition and the superimposition with one of the memory pages, **characterized in that** the switching between the original memory configuration and the superimposition with one of the memory pages of the second memory area (USL) is carried out by the software of the control device (100) itself.

2. Method according to Claim 1, **characterized in that** the switching of the memory pages (208, 209) and/or the switching on/off (EA) of the superimposition of the memory area (207) by means of at least one of the memory pages (208 or 209) is/are requested by an application system (101).

3. Method according to Claim 2, **characterized in that** the application system (101) requests the switching and/or the switching on/off (EA) of the superimposition by writing a switching identifier (UK) to a predefined memory location (206) of the control device (100) which is not used during superimposition.

4. Method according to Claim 1, **characterized in that** the effected switching of the memory pages (208, 209) and/or the switching on/off (EA) of the superimposition is/are confirmed by the software of the control device (100).

5. Method according to Claim 4, **characterized in that** the software of the control device (100) confirms the switching and/or the switching on/off (EA) of the superimposition by writing a confirmation identifier (BK) to a predefined memory location (206) of the control device (100) which is not used during superimposition.

6. Method according to Claim 1, **characterized in that** the first memory area (207) which is superimposed can be changed during operation of the control device (100) by virtue of the control device (100) changing this first memory area on the basis of a superimposition configuration table (ÜKT, 210).

7. Method according to Claim 6, **characterized in that** the superimposition configuration table (ÜKT, 210) is written to the control device (100) by the application system (101) and is changed during operation.

8. Method according to Claim 6, **characterized in that** the control device (100) processes the superimposition configuration table (ÜKT, 210) during an initialization operation and the second memory area (USL) is therefore immediately superimposed on the first memory area (207) during initialization.

9. Apparatus for switching in a memory for a control device (100), wherein a second memory area (USL) is superimposed on a first memory area (207) in the control device, wherein the second memory area (USL) contains at least one memory page (208, 209), wherein the apparatus is configured in such a manner that it is possible to switch between an original memory configuration without superimposition and the superimposition with one of the memory pages, **characterized in that** the apparatus is configured in such a manner that the switching between the original memory configuration and the superimposition with one of the memory pages of the second memory area (USL) is carried out by the software of the control device (100) itself.

10. Apparatus according to Claim 9, **characterized in that** provision is made of at least one memory location (206) which is not used during superimposition and to which a switching identifier (UK) for requesting the switching is written.

11. Apparatus according to Claim 9, **characterized in that** provision is made of at least one memory location (206) which is not used during superimposition and to which a confirmation identifier (BK) for confirming the switching is written.

12. Apparatus according to Claim 9, **characterized in that** a superimposition configuration table (ÜKT, 210) is written to the control device (100) by the application system (101), and the apparatus is configured in such a manner that the superimposition configuration table (ÜKT, 210) can be changed during operation.

13. Apparatus according to Claim 9, **characterized in that** a memory area (210) is provided for a superimposition configuration table (ÜKT), and the apparatus is configured in such a manner that the first memory area (207) which is superimposed can be changed during operation of the control device by virtue of the control device changing this first memory area on the basis of the superimposition configuration table (ÜKT).

14. Apparatus according to Claim 12, **characterized in that** it is configured in such a manner that the control device (100) processes the superimposition configuration table (ÜKT) during an initialization operation and the second memory area (USL) is therefore immediately superimposed on the first memory area (207) during initialization.

15. Apparatus according to Claim 13 or 14, **characterized in that** the memory area (210) with the superimposition configuration table (ÜKT) is configured in such a manner that the superimposition configuration table (ÜKT) is retained even after the energy supply for the apparatus has been switched off.

16. Computer program having program code means for carrying out all of the steps from any of Claims 1 to 8 when the program is executed by an apparatus according to Claim 9.

17. Computer program according to Claim 16, **characterized in that** it is stored on a computer-readable data storage medium.

## Revendications

1. Procédé pour réaliser une commutation sur une mémoire destinée à un appareil de commande (100), dans lequel une seconde zone de mémoire (USL) est superposée à une première zone de mémoire (207) dans l'appareil de commande, dans lequel la seconde zone de mémoire (USL) contient au moins une page de mémoire (208, 209), dans lequel une commutation peut s'effectuer entre une configuration de mémoire initiale non superposée et la superposition par l'une des pages de mémoire, **caractérisé en ce que** la commutation est effectuée automatiquement au moyen du logiciel de l'appareil de commande (100) entre la configuration de mémoire initiale et la superposition par l'une des pages de mémoire de la seconde zone de mémoire (USL).

2. Procédé selon la revendication 1, **caractérisé en ce que** la commutation des pages de mémoire (208, 209) et/ou l'activation/la désactivation (EA) de la superposition de la zone de mémoire (207) est demandée par au moins l'une des pages de mémoire (208 ou 209) au moyen d'un système d'application (101).

3. Procédé selon la revendication 2, **caractérisé en ce que** le système d'application (101) demande la commutation et/ou l'activation/la désactivation (EA) de la superposition par inscription d'un identificateur de commutation (UK) à un emplacement de mémoire prédéterminé (206) de l'appareil de commande (100), lequel emplacement n'est pas utilisé lors de la superposition.

4. Procédé selon la revendication 1, **caractérisé en ce que** la commutation effectuée des pages de mémoire (208, 209) et/ou l'activation/la désactivation (EA) de la superposition est confirmée par le logiciel de l'appareil de commande (100).

5. Procédé selon la revendication 4, **caractérisé en ce que** le logiciel de l'appareil de commande (100) confirme la commutation et/ou l'activation/la désactivation (EA) de la superposition en inscrivant un identificateur de confirmation (BK) à un emplacement de mémoire prédéterminé (206) de l'appareil de commande (100), lequel emplacement n'est pas utilisé lors de la superposition.

6. Procédé selon la revendication 1, **caractérisé en ce que** la première zone de mémoire (207) qui est superposée lors du fonctionnement de l'appareil de commande (100) peut être utilisée en faisant en sorte que l'appareil de commande (100) modifie ladite première zone de mémoire sur la base d'une table de configuration de superposition (ÜKT, 210).

7. Procédé selon la revendication 6, **caractérisé en ce que** la table de configuration de superposition (ÜKT, 210) est inscrite par le système d'application (101) dans l'appareil de commande (100) et est modifiée pendant le fonctionnement.

8. Procédé selon la revendication 6, **caractérisé en ce que** l'appareil de commande (100) traite la table de configuration de superposition (ÜKT, 210) lors d'un processus d'initialisation et par conséquent, **en ce que** la seconde zone de mémoire (USL) est superposée à la première zone de mémoire (207) dès l'initialisation.

9. Dispositif pour réaliser une commutation sur une mémoire destinée à un appareil de commande (100), dans lequel une seconde zone de mémoire (USL) est superposée à une première zone de mémoire (207) dans l'appareil de commande, dans lequel la seconde zone de mémoire (USL) contient au moins une page de mémoire (208, 209), dans lequel le dispositif est conçu de manière à ce qu'une commutation puisse être effectuée entre une configuration de mémoire initiale non superposée et la superposition par l'une des pages de mémoire, **caractérisé en ce que** le dispositif est conçu de manière à ce que la commutation soit effectuée automatiquement au moyen du logiciel de l'appareil de commande (100) entre la configuration de mémoire initiale et la superposition par l'une des pages de mémoire de la seconde zone de mémoire (USL).

10. Dispositif selon la revendication 9, **caractérisé en ce qu'**il est prévu au moins un emplacement de mémoire (206) qui n'est pas utilisé lors de la superposition et dans lequel un identificateur de commutation (UK) est inscrit pour demander la commutation.

11. Dispositif selon la revendication 9, **caractérisé en ce qu'**il est prévu au moins un emplacement de mémoire (206) qui n'est pas utilisé lors de la superposition et dans lequel un identificateur de confirmation (BK) est inscrit pour confirmer la commutation.

12. Dispositif selon la revendication 9, **caractérisé en ce qu'**une table de configuration de commutation (ÜKT, 210) est inscrite par le système d'application (101) dans l'appareil de commande (100), et **en ce que** le dispositif est conçu de manière à ce que la table de configuration de superposition (ÜKT, 210) puisse être modifiée pendant le fonctionnement.

13. Dispositif selon la revendication 9, **caractérisé en ce qu'**il est prévu une zone de mémoire (210) destinée à une table de configuration de commutation (ÜKT) et **en ce que** le dispositif est conçu de manière à ce que la première zone de mémoire (207), qui est soumise à une superposition lors du fonctionnement de l'appareil de commande, puisse être modifiée en faisant en sorte que l'appareil de commande modifie ladite première zone de mémoire sur la base de la table de configuration de superposition (ÜKT).

14. Dispositif selon la revendication 12, **caractérisé en ce qu'**il est conçu de manière à ce que l'appareil de commande (100) traite la table de configuration de superposition (ÜKT) lors d'un processus d'initialisation et par conséquent, de manière à ce que la seconde zone de mémoire (USL) soit superposée à la première zone de mémoire (207) dès l'initialisation.

15. Dispositif selon la revendication 13 ou 14, **caractérisé en ce que** la zone de mémoire (210) est configurée au moyen de la table de configuration de superposition (ÜKT) de manière à ce que la table de configuration de superposition (ÜKT) soit conservée même lors d'une coupure de l'alimentation en énergie du dispositif.

16. Programme d'ordinateur comportant des moyens à codes de programmes destinés à mettre en oeuvre toutes les étapes de l'une quelconque des revendications 1 à 8 lorsque le programme est exécuté par un dispositif selon la revendication 9.

17. Programme d'ordinateur selon la revendication 16, **caractérisé en ce qu'**il est stocké sur un support de données lisible par ordinateur.
